# EUROPÄISCHE PATENTSCHRIFT

(11) **EP 2 285 532 B1**
(45) Veröffentlichungstag und Bekanntmachung des Hinweises auf die Patenterteilung: **20.06.2012**
(21) Anmeldenummer: 09735672.9
(22) Anmeldetag: 04.04.2009
(51) Int. Cl.: B23Q 11/10, B08B 7/00, B23B 27/10

(54) **VERFAHREN ZUM KÜHLEN UND SCHMIEREN EINES WERKZEUGS UND ZUM REINIGEN DER BEARBEITETEN FLÄCHE, UND WERKZEUGSPINDEL DAFÜR**
METHOD FOR COOLING AND LUBRICATING A TOOL AND FOR CLEANING THE MACHINED SURFACE, AND SPINDLE THEREFORE
PROCÉDÉ DE REFROIDISSEMENT ET DE LUBRIFICATION D'UN OUTIL ET DE NETTOYAGE DE SURFACE USINÉE ET BROCHE POUR METTRE EN OEVRE CE PROCEDE

(30) Priorität: 26.04.2008 DE 102008021049
(43) Veröffentlichungstag der Anmeldung: 23.02.2011
(73) Patentinhaber: MAG IAS GmbH, 73033 Göppingen (DE)
(72) Erfinder: HORN, Wolfgang, 73035 Göppingen (DE); HAUS, Waldemar, 71364 Winnenden (DE); SCHMALZRIED, Siegfried, 78224 Singen (DE)
(74) Vertreter: Rau, Manfred
(86) Internationale Anmeldenummer: PCT/EP2009/002498
(87) Internationale Veröffentlichungsnummer: WO 2009/129925

(56) Entgegenhaltungen:
- WO-A-98/10217
- WO-A-03/026843
- WO-A-2007/012364
- US-A1- 2006 273 579

## Beschreibung

Die Erfindung betrifft ein Verfahren nach dem Oberbegriff des Anspruchs 1 und eine Werkzeug-Spindel nach Anspruch 2.

Aus der US 2006/273 579 A1 ist ein derartiges Verfahren bekannt, bei dem einem rotierenden Maschinenwerkzeug Kühl- und Schmiermittel zugeführt wird. Anschließend wird dem rotierenden Werkzeug Luft zugeführt, um das Werkzeug oder den Arbeitsbereich zu reinigen.

Aus der DE 102 20 526 A 1 ist ein Verfahren zur Kühlung eines spanend arbeitenden rotierenden Werkzeugs bekannt, bei dem ein Kühlmedium durch einen Innen-Kanal einer Werkzeug-Spindel zugeführt und durch einen Durchgangs-Kanal im Werkzeug während der spanenden Bearbeitung zugeführt wird. Am Ende der spanenden Bearbeitung wird die Kühlmittelzufuhr unterbrochen. Als Kühlmittel wird überkritisches CO₂ eingesetzt. Der Kühleffekt ist hierbei zufriedenstellend. Die in der Regel notwendige Schmierung während der spanenden Bearbeitung ist nicht befriedigend. Außerdem muss nachträglich noch eine Reinigung der bearbeiteten Flächen, in der Regel Bohrungen, stattfinden. Ein ähnliches Verfahren ist aus der GB 820,308 bekannt.

Aus der DE 10 2005 034 634 B3 ist ein Verfahren zur Reinigung von Kavitäten, in der Regel also Bohrungen, in Werkstücken bekannt, bei dem überkritisches CO₂ in die Kavität eingeleitet und damit die Kavität gespült wird. Nach dem Spülen der Kavität wird das in der Kavität befindliche überkritische CO₂ entspannt, sodass sich in der Kavität Kohlendioxidgas und Kohlendioxidschnee bilden und anschließend aus der Kavität ausgetrieben werden. Das Einführen des überkritischen CO₂ in die Kavität erfolgt mittels Lanzen, die in die Kavität eingeführt werden. Der apparative und fertigungstechnische Aufwand hierfür ist beträchtlich.

Aus der DE 199 15 619 A1 ist es bekannt, dass die Späne, die während einer spanenden Bearbeitung eines Werkstücks durch Minimalmengenschmierung gering mit Schmiermittel belastet sein können, durch einen von außen der Bearbeitungsstelle zugeführten Gasstrom entfernt werden, in dem feste CO₂-Teilchen enthalten sind. Eine zuverlässige Reinigung der Bearbeitungsstelle ist hiermit nicht möglich

Aus der DE 43 09 134 A1 ist es bekannt, einer Bearbeitungsstelle, an der mittels eines Werkzeugs eine spanende Bearbeitung eines Werkstücks erfolgt, von außen getrennt Schmiermittel und Kühlmittel zuzuführen. Eine zuverlässige Minimalmengenschmierung einerseits und eine Reinigung der Bearbeitungsstelle nach der Bearbeitung andererseits ist hiermit nicht möglich.

Der Erfindung liegt die Aufgabe zugrunde, ein Verfahren der gattungsgemäßen Art zu schaffen, mittels dessen in fertigungstechnisch einfacher Weise einerseits ein Kühlen und Schmieren während der spanenden Bearbeitung und anschließend ein Reinigen erfolgen kann, und hierfür eine vorrichtungsmäßige Lösung vorzugeben.

Diese Aufgabe wird erfindungsgemäß bei einem Verfahren nach dem Oberbegriff des Anspruchs 1 durch die Merkmale in dessen Kennzeichnungsteil gelöst. Der Kern der Erfindung liegt darin, dass durch das spanend arbeitende Werkzeug selber zum einen in bekannter Weise Kühl- und Schmiermittel während der Bearbeitung zugeführt wird und damit beispielsweise eine übliche Minimal-Mengen-Schmierung erfolgt. Am Ende des Bearbeitungsvorgangs, in der Regel also während des Herausführens des Werkzeugs aus dem Werkstück, wird durch das Werkzeug anstelle des Kühl- und Schmiermittels überkritisches CO₂ zugeführt, mittels dessen Späne, Fettreste und sonstige Schmutzpartikel ausgetrieben werden. Das Werkzeug wird während dieses Reinigungsvorgangs noch eine kontrollierte Rotation ausüben. Dadurch ergeben sich Gleitstrahl-, Schrägstrahl- und Prallstrahlvorgänge an den Verunreinigungen, beispielsweise also an Öl, Werkstoffresten, Fetten und dergleichen. Weiterhin wirkt die Sublimationsexpansion des CO₂. Durch all diese Effekte gemeinsam kommt es zu einem Ablösen und zum Abtransport der zu entfernenden Verunreinigungen. Das CO₂ kühlt sich bei der Expansion sehr schnell ab. Es bilden sich hierbei Kohlendioxidkristalle, also Trockeneis, und gasförmiges Kohlendioxid. Dieses Gemisch wird durch das Werkzeug hindurch auf die bearbeitete Fläche gerichtet. Ein großer Vorteil liegt darin, dass die Werkzeuge selber nicht verändert zu werden brauchen. Es können also alle bekannten und üblichen Präzisionswerkzeuge weiter eingesetzt werden.

Es sind lediglich die im Anspruch 2 angegebenen zusätzlichen Maßnahmen an einer Werkzeug-Spindel erforderlich.

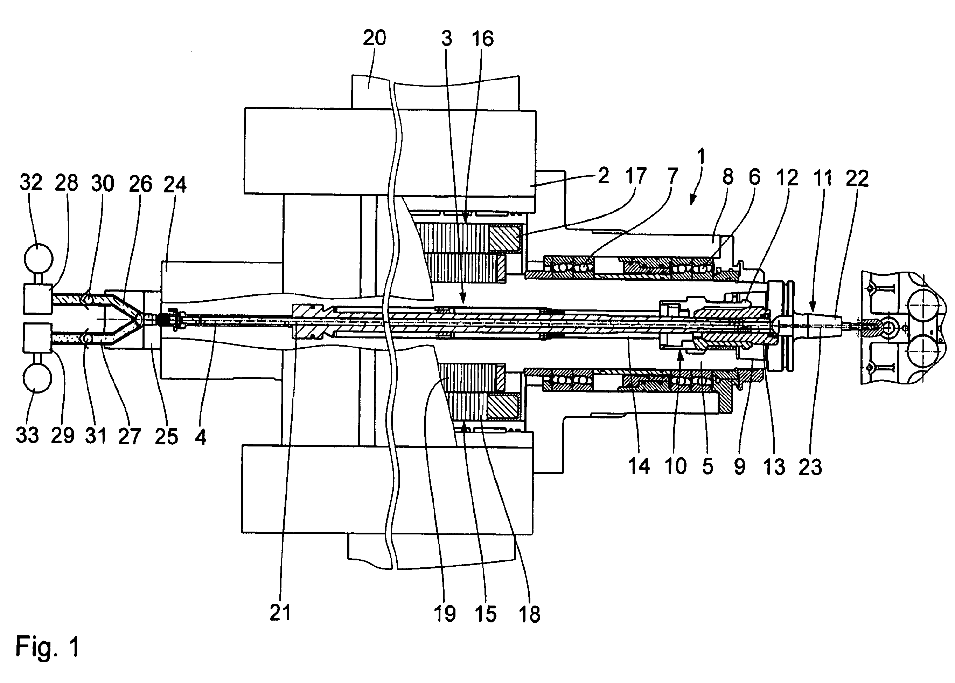

Weitere Merkmale, Vorteile und Einzelheiten der Erfindung ergeben sich aus der nachfolgenden Beschreibung anhand der Zeichnung. Es zeigt
- Fig. 1: einen Längsschnitt durch eine Werkzeug-Spindel nach der Erfindung,
- Fig. 2: ein Bearbeitungsbeispiel nach der Erfindung und
- Fig. 3: ein weiteres Bearbeitungsbeispiel nach der Erfindung.

Die in der Zeichnung dargestellte Werkzeug-Spindel 1 weist ein Gehäuse 2 auf, in dem eine Welle 3 angeordnet und um eine Mittel-Längs-Achse 4 drehantreibbar gelagert ist. Die Welle 3 ist an ihrem vorderen Ende mittels Wälz-Lagern 6, 7 in einem im Wesentlichen zylindrischen vorderen Abschnitt 8 des Gehäuses 2 gelagert.

An der Stirnseite der Welle 3, also an deren vorderem Ende 5, ist eine Werkzeug-Aufnahme 9 angeordnet, in der mittels einer Werkzeug-SpannEinrichtung 10 ein Werkzeug 11 fest eingespannt werden kann. Die SpannEinrichtung 10 weist Spann-Backen 12 auf, die mittels eines SpannBolzens 13 gespreizt werden können. Der Spann-Bolzen 13 ist mittels einer die Welle 3 koaxial durchsetzenden Zug-Stange 14 betätigbar. Derartige Spann-Einrichtungen 10 sind in der Praxis allgemein üblich und beispielsweise aus der DE 196 2.9 991 A 1 bekannt. Üblicherweise wird eine derartige Zug-Stange 14 durch eine vorgespannte Feder von der Werkzeug-Aufnahme 9 weg belastet, wodurch das Werkzeug 11 fest in den Spann-Backen 12 in der Werkzeug-Aufnahme 9 gehalten wird. Zum Lösen der Spann-Backen 12 zum Zwecke eines Werkzeug-Wechsels wird die Zug-Stange 14 in entgegengesetzter Richtung, also zur Werkzeug-Aufnahme 9 hin verschoben, wodurch über den Spann-Bolzen 13 die Spann-Backen 12 geöffnet werden und das Werkzeug 11 herausgenommen werden kann.

Im Gehäuse 2 ist weiterhin ein nur angedeuteter Spindel-Dreh-Antrieb 15 angeordnet, bei dem es sich um einen Elektromotor handelt. Dessen Stator 16 ist axial und tangential fest, also drehfest, im Gehäuse 2 angebracht. Zwischen den Wickelköpfen 17 des Stators 16 ist das Stator-Blechpaket 18 angeordnet. Auf der Welle 3 ist das Rotor-Blechpaket 19 drehfest montiert.

Die Werkzeug-Spindel 1 ist mit ihrem Gehäuse 2 in einer nur angedeuteten Werkzeug-Maschine 20 abgestützt.

In der hohl ausgebildeten Zug-Stange 14 ist ein rohrförmiger Innen-Kanal 21 angeordnet, der bis zur Werkzeug-Aufnahme 9 geführt ist und dicht gegen ein in die Werkzeug-Aufnahme 9 eingespanntes Werkzeug 11 anliegt. Das Werkzeug 11 weist wiederum einen bis zu seiner Werkzeug-Spitze 22 durchgehend Durchgangs-Kanal 23 auf, der dicht in den Innen-Kanal 21 anschließt.

An dem der Werkzeug-Aufnahme 9 abgewandten hinteren Ende 24 der Welle 3 ist eine sogenannte Dreh-Zuführung 25 für fließfähige Medien angebracht, in die zwei Leitungen 26, 27 einmünden, wobei in jeder Leitung 26, 27 ein schaltbares Ventil 28 bzw. 29 angeordnet ist. Die Leitung 26 mit dem Ventil 28 dient zur Zuführung eines Kühl- und Schmiermittels, während die Leitung 27 mit dem Ventil 29 zur Zuführung überkritischen CO₂ dient. Die Ventile 28, 29 sind derart gegeneinander verriegelt, dass nicht beide gleichzeitig geöffnet sein können.

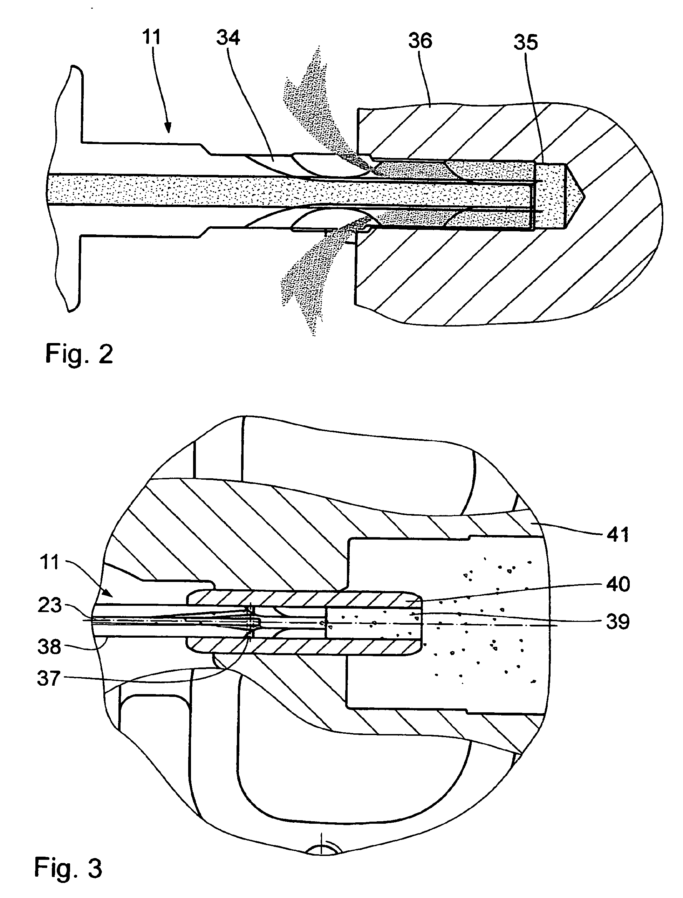

Bei dem Bearbeitungsbeispiel nach Figur 2 ist das Werkzeug 11 ein Bohrer 34, mittels dessen eine Sackloch-Bohrung 35 in ein Werkstück 36 gebohrt wird. Während des Bohrens wird über die Leitung 26 mit dem Ventil 28 ein geeignetes Kühl-Schmier-Mittel durch den Innen-Kanal 21 und den Durchgangs-Kanal 23 im Werkzeug 11 bis zu dessen Spitze 22 befördert, wo es während des Bohrvorgangs in üblicher Weise kühlt und schmiert und zum Abtransport der Späne beiträgt.

Das Kühl- und Schmiermittel kann zusätzlich auch durch Querkanäle 37 teilweise vor der Werkzeug-Spitze 22 austreten.

Am Ende des Bohrvorgangs wird das Ventil 28 geschlossen und damit die Zufuhr von Kühl-Schmier-Mittel 26 unterbrochen und das Ventil 29 geöffnet, sodass überkritisches CO₂ durch die Leitung 27 zugeführt wird und ebenfalls in der geschilderten Weise zumindest teilweise bis zur Werkzeug-Spitze 22 strömt und dort austritt. Am Ende der Bearbeitung des Werkstücks 36 werden hierdurch während des Rücklaufs des Werkzeugs 11 aus der Sackloch-Bohrung 35 unter kontrollierter Rotation des Werkzeuges 11 sowie unter Sublimationsexpansion des CO₂ Verunreinigungen abgelöst und vom Werkstück 36 abgelöst und abtransportiert. Kleine Partikel, Späne und Reste von Bearbeitungsölen und -fetten werden durch Lösungsvorgänge im gasförmigen CO₂ von der Oberfläche des Werkstücks 36 entfernt.

Bei dem Bearbeitungsbeispiel nach Figur 3 handelt es sich bei dem Werkzeug 11 um ein Reib-Werkzeug 38, mittels dessen eine Bohrung 39 in einer Ventil-Führungs-Büchse 40 hoch präzise bearbeitet wird. Diese Ventil-Führungs-Büchse 40 ist in einem Werkstück 41 angeordnet, bei dem es sich um einen Zylinderkopf für einen Verbrennungsmotor handelt.

Zwischen den Ventilen 28, 29 und der Dreh-Zuführung 25 ist jeweils ein Rückschlag-Ventil 30, 31 angeordnet, das verhindert, dass das eine Medium in die Leitung zurückströmen kann, die für das andere Medium vorgesehen ist. Vor den Ventilen 28, 29 sind Druckquellen 32, 33 für Kühl- und Schmiermittel einerseits und überkritisches CO₂ andererseits vorgesehen.

## Patentansprüche

1. Verfahren zum Kühlen und Schmieren eines Werkzeugs (11, 34, 38) während einer spanenden Bearbeitung eines Werkstücks (36, 41) und zum Reinigen der bearbeiteten Fläche in einer Bohrung (35, 39), wobei während der spanenden Bearbeitung der bearbeiteten Fläche ein Kühl-Schmier-Mittel durch das Werkzeug (11, 34, 38) zugeführt wird,
**dadurch gekennzeichnet,**
**dass** das Werkzeug (11, 34, 38) nach der Bearbeitung aus der Bohrung (35, 39) herausgeführt wird und
**dass** nach der Bearbeitung während des Herausführens des Werkzeugs (11, 34, 38) aus der Bohrung (35, 39) überkritisches CO₂ durch das Werkzeug (11, 34, 38) zugeführt wird.

2. Werkzeug-Spindel (1) für eine Werkzeug-Maschine (20) zur Durchführung des Verfahrens nach Anspruch 1,
- mit einer drehantreibbar in einem Gehäuse (2) gelagerten Welle (3),
- mit einer Werkzeug-Aufnahme (9) an einem vorderen Ende (5) der Welle (3) zur Aufnahme eines einen Durchgangs-Kanal (23) auf weisenden Werkzeug (11, 34, 38),
- mit einem Innen-Kanal (21) in der Welle (3) zur Zuführung eines fließfähigen Mediums zum Durchgangs-Kanal (23) des Werkzeugs (11,34,38),
- mit einer schaltbaren Zuführung (28) für Kühl- und Schmiermittel zum Innen-Kanal (21) und
- mit einer schaltbaren Zuführung (29) für überkritisches CO₂ zum Innen-Kanal (21).

3. Werkzeug-Spindel (1) nach Anspruch 2, **dadurch gekennzeichnet, dass** die Zuführungen (28, 29) über eine gemeinsame Dreh-Zuführung (25) an einem hinteren Ende (24) der Welle (3) in den Innen-Kanal (21) einmünden und dass in jeder Zuführung (28, 29) vor der Dreh-zuführung (25) ein Rückschlag-Ventil (30, 31) angeordnet ist.

## Claims

1. Method of cooling and lubricating a tool (11, 34, 38) during a chip-producing machining of a workpiece (36, 41) and for cleaning the machined surface in a drill hole (35, 39),
wherein a cooling and lubricating agent is supplied via the tool (11, 34, 38) during the chip-producing machining of the machined surface,
**characterized**
**in that** the tool (11, 34, 38) is removed from the drill hole (35, 39) after machining, and
**in that** after machining, supercritical CO₂ is supplied via the tool (11, 34, 38) while the tool (11, 34, 38) is being removed from the drill hole (35, 39).

2. Tool spindle (1) for a machine tool (20) for performing the method according to claim 1, the tool spindle (1) comprising
- a shaft (3) mounted for rotary drive in a housing (2);
- a tool holder (9) at a front end (5) of the shaft (3) for holding a tool (11, 34, 38) comprising a through-channel (23);
- an internal channel (21) in the shaft (3) for feeding a free-flowing medium to the through-channel (23) of the tool (11, 34, 38);
- a switchable feeder (28) for cooling and lubricating agent to the internal channel (21); and
- a switchable feeder (29) for supercritical CO₂ to the internal channel (21).

3. Tool spindle (1) according to claim 2, **characterized in that** the feeders (28, 29) open into the internal channel (21) via a common rotary feeder (25) at a rear end (24) of the shaft (3), and that in each feeder (28, 29) is arranged a non-return valve (30, 31) in front of the rotary feeder (25).

## Revendications

1. Procédé de refroidissement et de lubrification d'un outil (11, 34, 38) pendant l'usinage d'une pièce à usiner (36, 41) et de nettoyage de la surface usinée dans un alésage (35, 39), un produit de refroidissement et de lubrification étant en circulation dans l'outil (11, 34, 38) pendant l'usinage de la surface à usiner,
**caractérisé en ce**
**que** l'outil (11, 34, 38) est retiré de l'alésage (35, 39) après l'usinage et
**que** du CO₂ supercritique est amené à travers l'outil (11, 34, 38) après l'usinage pendant le retrait de l'outil (11, 34, 38) de l'alésage (35, 39).

2. Broche (1) pour une machine-outil (20) pour la mise en oeuvre du procédé selon la revendication 1,
- comprenant un arbre (3) pouvant être mis en rotation logé dans un carter (2),
- comprenant un réceptacle pour les outils (9) au niveau d'une extrémité avant (5) de l'arbre (3) pour l'admission d'une canalisation de passage (23) sur l'outil en question (11, 34, 38),
- comprenant une canalisation interne (21) dans l'arbre (3) pour le passage d'un milieu pouvant s'écouler vers la canalisation de passage (23) de l'outil (11, 34, 38),
- comprenant une alimentation (28) commutable pour le produit de refroidissement et de lubrification vers la canalisation interne (21) et
- comprenant une alimentation commutable (29) de CO₂ supercritique vers la canalisation interne (21).

3. Broche (1) selon la revendication 2 **caractérisée en ce que** les alimentations (28, 29) débouchent par l'intermédiaire d'un raccord d'alimentation tournant commun (25) à l'extrémité arrière (24) de l'arbre (3) dans la canalisation interne (21) et qu'un clapet anti-retour (30, 31) est disposé au niveau de chaque alimentation (28, 29) avant le raccord d'alimentation tournant (25).
